# EUROPÄISCHE PATENTSCHRIFT

(11) **EP 3 421 222 B1**
(45) Veröffentlichungstag und Bekanntmachung des Hinweises auf die Patenterteilung: **13.11.2019**
(21) Anmeldenummer: 18174327.9
(22) Anmeldetag: 25.05.2018
(51) Int. Cl.: B29C 55/16

(54) **BIAXIAL VERSTRECKTE KUNSTSTOFFFOLIE FÜR FOLIENKONDENSATOREN, INSBESONDERE FÜR HOCHTEMPERATURKONDENSATOREN**
BIAXIALLY STRETCHED PLASTIC SHEET FOR FILM CAPACITORS, IN PARTICULAR FOR HIGH TEMPERATURE CAPACITORS
FILM EN MATIÈRE PLASTIQUE ÉTIRÉ BIAXIALEMENT POUR CONDENSATEURS À FILM, EN PARTICULIER POUR CONDENSATEURS HAUTE TEMPÉRATURE

(30) Priorität: 30.06.2017 DE 102017114647
(43) Veröffentlichungstag der Anmeldung: 02.01.2019
(73) Patentinhaber: Brückner Maschinenbau GmbH & Co. KG, 83313 Siegsdorf (DE)
(72) Erfinder: Wagner, Christina, 83395 Freilassing (DE); Lund, Roland, 83236 Übersee (DE)
(74) Vertreter: Flach Bauer Stahl Patentanwälte Partnerschaft mbB

(56) Entgegenhaltungen:
- WO-A1-2010/058657
- US-A1- 2012 076 984

## Beschreibung

Die vorliegende Erfindung betrifft eine simultan biaxial verstreckte Folie für Folienkondensatoren, insbesondere für Hochtemperaturkondensatoren umfassend wenigstens ein Homopolymer vom syndiotaktischen Polystyrol-Typ. Ferner betrifft die vorliegende Erfindung die Verwendung der erfindungsgemäßen Folien in Folienkondensatoren und Folienkondensatoren, die diese Folie enthalten. Ein weiterer Aspekt der vorliegenden Erfindung ist ein Verfahren zur Herstellung der Folie.

### Stand der Technik

Kunststofffolien zur elektrischen Isolation und ihre Verwendung in Kondensatoren sind seit langem bekannt. Die Folien in Folienkondensatoren enthalten in Regel als Dielektrikum eine Folie die Polyester (PET), Polyethylennaphthalat (PEN), Polyphenylensulfid (PPS), Polypropylen (PP), Polytetrafluorethylen (PTFE) oder Polystyrol (PS) enthält oder daraus besteht. Viele dieser Materialien haben den entscheidenden Nachteil, dass sie entweder sehr teuer sind oder diese nur bedingt in Hochtemperaturkondensatoren eingesetzt werden können, da sie entweder einen sehr hohen Verlustfaktor, schlechte Selbstheilungseigenschaften, abfallenden Isolationswiderstand bei steigender Temperatur oder insgesamt keine Temperaturstabilität im geforderten Bereich aufweisen.

Das Dokument WO 2010/058657 A1 offenbart ein Verfahren zur Herstellung eines Harzfilms aus 100 Teilen Polyphenylensulfid und 0,8 bis 30 Teilen syndiotaktischen Polystyrol, in denen das Polyphenylensulfid eine kontinuierliche Phase bildet und das Polystyrol eine darin enthaltenen disperse Phase bildet (siehe Zusammenfassung und Ansprüche 1 und 2). Die Foliendicke beträgt 20 bis 100 µm. Die Folie wird bei 86 bis 100°C gereckt mit einem Reckverhältnis von 3,0 bis 4,0 in Längsrichtung und 2,4 bis 3,4. Das Dokument beschreibt ebenfalls die Verwendung dieser Folien in Kondensatoren.

Biaxial verstreckte Folien (auch biaxial orientierte Folien genannt) aus syndiotaktischen Polystyrol weisen in der Regel eine gute Wärmebeständigkeit, gute elektrische Eigenschaften und hohe Transparenz auf. Auch sind sie relativ preiswert. Sie können zum Beispiel in Magnetbändern, als Folien in photomechanischen Verfahren und als dielektrische Folien in Kondensatoren, für elektrische Platinen, zu Isolation von Motoren, als Umhüllungsmaterial usw. eingesetzt werden. Folienkondensatoren werden aus solchen Folien hergestellt, in dem sie mit einem Metallfilm, zum Beispiel aus Aluminium kombiniert und aufgewickelt werden. Wichtige Eigenschaften von Folien zur Verwendung in Hochtemperaturkondensatoren sind der Wärmeschrumpf der Folien und die selbstheilenden Eigenschaften der Folien, die sich in dem Wärmeschrumpf von daraus hergestellten Folienkondensatoren, dem Erhalt der Kapazität nach Erwärmen, der Überlebensrate solcher Kondensatoren nach Erhitzen und anderen Eigenschaften äußern. Wichtige Eigenschaften bei Hochtemperaturkondensatoren sind zudem die Oberflächeneigenschaften des Films, die besondere Bedeutung für die Weiterverarbeitung und Langzeittemperaturstabilität haben.

Der Trend zur Miniaturisierung von elektrischen Geräten und elektronischen Bauteilen führt zunehmend dazu, dass Folienkondensatoren in engen, schwer kühlbaren Orten eingesetzt werden. Dieser und andere Gründe führen zu einem steigenden Bedarf an Hochtemperaturkondensatoren die bei immer höheren Betriebstemperaturen zuverlässig bei langer Lebensdauer ihre Funktion erfüllen müssen. Bisher sind Folienkondensatoren mit Folien aus biaxial verstreckten syndiotaktischen Polystyrol nur bedingt bei Temperaturen von 100°C oder darüber einsetzbar, da solche Folien in aller Regel ungenügende Eigenschaften, insbesondere ungenügende Selbstheilungseigenschaften aufweisen.

### Aufgabe der Erfindung

Es war daher die Aufgabe der vorliegenden Erfindung, eine Folie zur Verfügung zu stellen, die bei hohen Betriebstemperaturen verbesserte Eigenschaften aufweist, insbesondere verbesserte elektrische Eigenschaften und verbesserte Selbstheilungseigenschaften oder beides. Ebenso ist es eine Aufgabe der vorliegenden Erfindung Folien bereitzustellen, die verbesserte mechanische Eigenschaften, eine verringerte Oberflächenrauheit oder beides aufweisen.

Die Aufgabe wird erfindungsgemäß bezüglich eines Verfahrens zur Herstellung einer Folie gemäß den Merkmalen nach Anspruch 1 gelöst. Vorteilhafte Ausgestaltungen der Erfindung sind in den Unteransprüchen angegeben.

### Vorteile der Erfindung

Durch die Erfindung lassen sich in überraschender Weise Vorteile erzielen, da nunmehr eine Folie herstellbar ist, die sich insbesondere zur Herstellung eines Folienkondensators verwenden lässt. Dies wird durch eine Reihe von Merkmalen kumulativ bewirkt. So ist entscheidungserheblich, dass die erfindungsgemäße Folie nicht in einem sequentiellen Verfahren, also durch Durchführung zweier hintereinander folgender Reckschritte, sondern in einem Simultan-Reckprozess hergestellt wird. Bei einem sequentiellen Recken würde eine Folie zunächst in Längs- und dann in Querrichtung gereckt werden. Im Längsreckwerk würde die Folie dann über eine Vielzahl von Walzen geführt werden, um in mehreren Stufen einen Längsreckprozess durchzuführen. Es hat sich allerdings nunmehr im Rahmen der Erfindung gezeigt, dass bei einem derartigen Längsreckprozess im mikroskopischen Bereich kleinste Kratzer in der Folie entstehen können. Derartige Kratzer würden aber vor allem dann, wenn die Folie für einen Kondensator eingesetzt wird, zu einer Beeinträchtigung der Funktion des Kondensators führen. Solche Kratzer hätten zusätzlich auch noch einen negativen Einfluss auf die Metallisierung der Folie.

Da also die Erfindung im Rahmen eines Simultanreckprozesses hergestellt wird, die Folie also somit nicht über ein Längsreckwerk mit Längsreckrollen geführt wird, kann die Folie frei von geringsten Oberflächenbeeinträchtigungen und Kratzern erzeugt werden.

Zum einen zeichnet sich die erfindungsgemäße Folie dann auch durch die isotropen Eigenschaften in Maschinenrichtung (also Folienabzugsrichtung oder Folienlängsrichtung) und in Querrichtung dazu aus. Diese bevorzugten Eigenschaften lassen sich im Rahmen der Erfindung dadurch realisieren, dass der Film in einem Simultanreckprozess hergestellt wird.

Der Simultanreckprozess hat gegenüber einem sequentiellen Reckprozess (bei welchem also in zwei aufeinanderfolgenden Schritten erst in Längsrichtung und dann in Querrichtung oder umgekehrt gereckt wird) weitere Vorteile. Denn bei sequentiell hergestellten Filmen tritt eine erhöhte Abrisshäufigkeit durch eine erhöhte spannungsinduzierte Kristallisation auf, insbesondere bei hohen Dehngeschwindigkeiten. Dadurch lassen sich auch nur geringere Streckverhältnisse realisieren. Zudem weist die Mechanik für simultane Reckprozesse Beschränkungen auf, bei denen beispielsweise der Schrumpf in Abzugsrichtung (MD-Richtung) nicht einstellbar ist, wodurch ebenfalls negative Auswirkungen auf die elektrischen Eigenschaften und das Langzeitverhalten des Films verursacht werden.

Zudem weist die erfindungsgemäße Folie beispielsweise auch gegenüber dem Stand der Technik gemäß der DE 43 27 293 A1 den weiteren Vorteil auf, dass bei dem im Rahmen der Erfindung verwendeten Simultanreckverfahren niedrige Geschwindigkeiten bei der Herstellung des zu reckenden Films gefahren werden können, um den gleichen Effekt bezüglich der so hergestellten Folie zu erhalten, die ansonsten nur in den sequentiellen Reckverfahren erzielbar sind.

Die o.g. isotropen Eigenschaften des im Rahmen der Erfindung hergestellten Films bestehen bezüglich der wichtigsten Kriterien der Folie, wie z.B. bezüglich der Dehnungsfestigkeit (Tensile strength), bezüglich des E-Moduls sowie der Bruchgefahr in Filmlängsrichtung. Neben der Verbesserung dieser mechanisch bedingten Werte lässt sich auch der Wert für die Durchschlagsspannung (Break Down Voltage) bei dem erfindungsgemäß hergestellten Film gegenüber dem herkömmlichen Film deutlich verbessern. Zudem lässt sich ein Film herstellen, der keine Doppelbrechung aufweist und eine Folie herstellbar ist, die einen Längenausdehnungskoeffizienten aufweist, der in Längs- und Querrichtung gleich ist. Die entsprechenden Werte weisen also bevorzugt in Längs- und Querrichtung der Folie gleiche oder ähnliche Werte auf.

Allgemein werden nochmal die wichtigsten Vorteile zusammengefasst wiedergegeben, die sich im Rahmen des erfindungsgemäßen, mittels eines simultanen Reckprozesses hergestellten Filmes ergeben, nämlich:
- Berührungslose Verstreckung
   ∘ Weniger Kratzer
   ∘ Im Rahmen der Erfindung sind Materialien bei der Herstellung für den Kunststofffilm verwendbar, die besonders gut miteinander verbindbar und versiegelbar sind
   ∘ Oberflächeneigenschaften beeinflussbar (beispielsweise auch die Rauhigkeit des Films)
- Flexibilität der Verstreckung
   ∘ MD/TD Profil wählbar, Relaxierung frei wählbar
   ∘ Mechanische Eigenschaften einstellbar
      ▪ Isotrope Eigenschaften (z.B. ein anderes Reißverhalten als bei sequentiell hergestellten Filmen, geringe Doppelbrechung (günstig für Display Anwendungen), gleicher oder niedriger Längenausdehnungskoeffizient (wichtig beim Laminieren und Weiterverarbeitung des Films bei hohen Temperaturen)
      ▪ Anisotropie (der Herstellprozess ist so beeinflussbar, dass das isotrope oder anisotrope Verhalten des Films in weiten Grenzen beliebig einstellbar ist)
      ▪ Die anisotropen Eigenschaften des Films können in Maschinenrichtung größer werden als sie in Querrichtung dazu einnehmen
   ∘ Schrumpf einstellbar
      ▪ Film ist mit isotropen Eigenschaften herstellbar
      ▪ Film ist auch mit anisotropen Eigenschaften herstellbar
      ▪ Die Höhe der Anisotropie im Film ist ebenfalls voreinstellbar, und kann in Maschinenlängsrichtung niedriger eingestellt werden als bei sequentiell gereckten Filmen
- Große Variationsmöglichkeiten bezüglich der Herstellbedingungen
   ∘ Geringe Dehngeschwindigkeiten sind bei Simultanreckprozessen realisierbar
      ▪ Ein hohes Streckverhältnis von über 10 in Maschinenlängsrichtung ist als Simultanreckprozess möglich
      ▪ Höhere Flächenstreckverhältnisse als bei sequentiell gereckten Filmen sind einstellbar
      ▪ Bei Simultanreckprozessen ist eine größere Vielfalt an Materialien verstreckbar als bei sequentiell gereckten Filmen
      ▪ Es ist eine geringere spannungsinduzierte Kristallisation gegeben
         - Die Folie wird bei Simultanreckprozessen weniger geschädigt
   ∘ Weniger Abrisse
   ∘ Sehr dünne Folien wie aber auch sehr dicke Folien sind im Rahmen der Simultanreckprozesse herstellbar.

Schließlich lässt sich im Rahmen der Erfindung auch ein Schrumpf der Folie in Maschinenlängsrichtung nach Durchführen des simultanen Recken günstig anstellen. Dies lässt sich insbesondere bei Verwendung von linearmotorgetriebenen Kluppen besonders vorteilhaft umsetzen, indem der Kluppenabstand in exakt eingestellter Weise in der Relaxierzone geringfügig verringert wird.

Schließlich erweist sich ebenfalls als günstig, dass im Rahmen der Erfindung eine Breitschlitzdüse zur Erzeugung der Schmelze verwendet wird, und zwar vorzugsweise mit einem Kleiderbügelverteiler, gegebenenfalls auch mit einer T-Düse.

Schließlich hat sich auch gezeigt, dass im Rahmen der Erfindung eine Verbesserung der Folie gegenüber herkömmlichen Folien dann erzielbar ist, wenn die Temperatur der Kühlwalze vergleichsweise hoch liegt. Denn die Schmelze wird ja auf die Kühlwalze übergeben, um sie zunächst abzukühlen und einen Castfilm zu erzeugen. Erfindungsgemäß liegt die Temperatur dieser Kühlwalze bzw. CR über 70°C, insbesondere über 75°C, 80°C, 85°C, 90°C. Als günstig hat sich ferner erwiesen, wenn diese Temperatur unter 105°C, liegt, insbesondere unter 100°C oder beispielsweise unter 95°C.

Somit lässt sich im Rahmen der Erfindung eine Folie erzeugen, die einen sehr guten Isolationswiderstand aufweist, der sich deutlich unterscheidet zur herkömmlichen PP-Folie. Im speziellen bei einem Temperaturbereich >110°C.

Somit wird im Rahmen der Erfindung eine Folie, d.h. insbesondere eine Kondensatorfolie vorgeschlagen, die sich vor allem für Folienkondensatoren und dabei insbesondere auch für Hochtemperaturkondensatoren eignet, die bei einer Temperatur von beispielsweise über 110°C und insbesondere über 120°C oder über 125°C einsetzbar sind.

Dabei umfasst die erfindungsgemäße Folie ein Homopolymer vom syndiotaktischem Polystyrol-Typ (sPS).

Eine derartige erfindungsgemäße Folie aus sPS hat noch den weiteren Vorteil beispielsweise gegenüber Folien aus PP, dass eine gute Verarbeitbarkeit bezüglich der Metallisierung der Folie und ein optimales Wickeln der Kondensatoren möglich ist, jedenfalls deutlich besser möglich ist, als bei Polypropylenfolien.

Bevorzugt wird im Rahmen des erfindungsgemäßen Verfahrens für die Herstellung der Folie reines sPS verwendet, welches kein Antiblock(mittel) enthält, da dies ansonsten die Durchschlagsspannung (Break Down Voltage) verschlechtern würde. Daher ist die Verwendung von reinem sPS sehr vorteilhaft.

In der Regel spricht man bei diesen Kondensatoren auch von Hochtemperaturkondensatoren. Es handelt sich im Rahmen der Erfindung aber auch im Allgemeinen um Folienkondensatoren (trocken) die als Zwischenkreiskondensatoren (DC-Link) in Umrichtern eingesetzt werden können. Diese Art von Kondensatoren können beispielsweise im Automotive Bereich und in der Industrie im Allgemein eingesetzt werden.

Üblicherweise werden als Materialien für Dielektrika folgende Materialien eingesetzt: Polyester (PET), Polyethylennaphthalat (PEN), Polyphenylensulfid (PPS), Polypropylen (PP), Polytetrafluorethylen (PTFE), Polystyrol (PS).

Diese Materialien besitzen aber den entscheidenden Nachteil, dass sie entweder sehr teuer sind oder diese nur bedingt bei Hochtemperaturkondensatoren eingesetzt werden können, da sie entweder einen sehr hohen Verlustfaktor, schlechte Selbstheilungseigenschaften oder insgesamt keine Temperaturstabilität im geforderten Bereich aufweisen.

Von daher unterscheidet sich die erfindungsgemäße Folie auch von den Lösungen nach dem Stand der Technik.

Die EP 1 383 146 A1 beschreibt lediglich einen Kondensator, der eine sPS-Folie als Dielektrikum besitzt. Vor allem aber beschreibt diese Vorveröffentlichung, dass die entsprechende Folie mit all den oben geschilderten Nachteilen sequentiell hergestellt wird, wodurch die Oberfläche der Folie die erwähnten Kratzer aufweist.

Gemäß der EP 2 495 275 A1 wird ebenfalls beschrieben, dass eine sPS-Folie in einem Kondensator verbaut werden kann, ohne dass erkennbar ist, welche Eigenschaften die Folie hierfür aufweisen muss. Auch in dieser Vorveröffentlichung wird nur ein sequentieller Reckprozess mit den oben geschilderten Nachteilen vorgeschlagen.

Schließlich wird in der EP 4 327 293 A1 ebenfalls ein sequentielles Reckverfahren zur Herstellung einer Folie beschrieben, wobei die Foliendicke zwischen 8 µm und 120 µm betragen soll. Dabei wird die Schmelze auf eine Kühlwalze(Chillroll (CR)) abgegeben, die lediglich eine Temperatur von 40°C aufweist. Hier hat sich erfindungsgemäß gezeigt, dass die Temperatur der Kühlwalze deutlich höher liegen muss, beispielsweise in einem Bereich von 90°C bis 95°C.

Schließlich wird in der Vorveröffentlichung auch kein Kleiderbügelverteiler für die Extrusionsdüse verwendet, der sich als ausgesprochen positiv erwiesen hat, um den gewünschten isotropen Kunststofffilm herzustellen.

Die Erfindung wird nachfolgend anhand von Beispielen näher erläutert. Dabei zeigen im Einzelnen:
- Figur 1:: ein Ablaufdiagramm zur Erläuterung der Schritte bei der Herstellung der erfindungsgemäßen Folie;
- Figur 2:: eine schematische Draufsicht auf eine Simultan-Reckanlage;
- Figur 3:: eine schematische Querschnittsdarstellung quer zur Längsrichtung einer Führungsschiene einer anhand von Figur 2 schematisch gezeigten Simultan-Reckanlage unter Verdeutlichung des Aufbaus einer Kluppentransporteinheit;
- Figur 4:: eine schematische vertikale Längsschnittdarstellung durch einen Simultanreckofen im Bereich der Reckzone, also mit einer entsprechenden bevorzugten Zonen-Temperaturaufteilung; und
- Figur 5:: eine Darstellung bezüglich des Isolationswiderstandes der erfindungsgemäßen sPS-Kondensatoren bei einer festen Prüfspannung von 100 Vdc bei verschiedenen Temperaturen im Vergleich zu Polypropylen-Kondensatoren.

### Beschreibung der Erfindung

Nachfolgend wird die Erfindung beschrieben, wobei aufeinanderfolgend auf verschiedene Aspekte eingegangen wird.

### Erfindungsgemäße Folie

Gegenstand der vorliegenden Erfindung ist ein Verfahren zur Herstellung einer simultan biaxial verstreckten Folie für Hochtemperaturkondensatoren umfassend wenigstens ein Homopolymer vom syndiotaktischem Polystyrol-Typ. Solche Folien weisen neben guten mechanischen Eigenschaften auch verbesserte elektrische Eigenschaften bei hohen Temperaturen auf. Unter hohen Temperaturen oder Hochtemperatur werden im Sinne dieser Erfindung insbesondere Temperaturen von 120°C oder mehr verstanden. Bei von aus den erfindungsgemäßen Folien herstellten Kondensatoren werden insbesondere Betriebstemperaturen von 120°C oder mehr verstanden. Insbesondere weisen die erfindungsgemäßen Folien einen guten Wärmeschrumpf und gute Selbstheilungseigenschaften auf.

Der Ausdruck "Homopolymer vom syndiotaktischem Polystyrol-Typ" betrifft ein Styrol-Polymer oder seine Derivate. Typische Beispiele für Homopolymere des Styrol-Typs sind Polystyrol, Poly(alkylstyrole) wie Poly(p-, m-oder o-methylstyrol), Poly(2,4-, 2,5-, 3,4-oder 3,5-dimethylstyrol) und Poly(p-tert-butylstyrol); Poly(halogenierte Styrole) wie Poly (p-, m-oder o-chlorstyrol), Poly(p-, m-oder o-bromstyrol), Poly(p-, m-oder o-fluorstyrol), Poly(o-methyl-p-fluorstyrol), Poly(halogenierte alkylstyrole) wie Poly(p-, m-oder o-chlormethylstyrol), Poly(alkoxystyrole) wie Poly(p-, m- oder o-methoxystyrol) und Poly(p-, m-oder o-ethoxystyrol); Poly(carboxyalkylstyrole) wie Poly(p-, m-oder o-carboxymethylstyrol), Poly(alkyletherstyrole) wie Poly(p-vinylbenzylpropylstyrol), Poly (alkylsilylstyrole) wie Poly(p-trimethylsilylstyrol) und Poly(vinylbenzyldimethoxyphosphid). Besonders bevorzugt ist Polystyrol.

Ferner bezieht sich der Ausdruck "syndiotaktisch" auf eine syndiotaktische Struktur, bei welcher die Phenyl- oder die substituierten Phenylgruppen in der Seitenkette eines Homopolymeren des Styrol-Typs eine Syndiotaktizität von mindestens 75% in der Dyad-Form (bestehend aus zwei Einheiten) und mindestens 30% in der Pentad-Form (bestehend aus fünf Einheiten) aufweisen, gemessen durch kernmagnetische Resonanz. Bevorzugt weist das Homopolymer eine Syndiotaktizität von mindestens 85% in der Dyad-Form und mindestens 50% in der Pentad-Form auf. Das erfindungsgemäß verwendete syndiotaktische Homopolymer des Styrol-Typs ist nicht auf ein einziges der oben definierten Homopolymere beschränkt, sondern es können auch Gemische derselben verwendet werden und solange sich die Syndiotaktizität der Polymeren und Copolymeren innerhalb der oben angegebenen Bereiche befinden, auch ein Gemisch aus syndiotaktischen Homopolymeren des Styrol-Typs und anderen Polymeren des Styrol-Typs mit ataktischen und/oder isotaktischen Strukturen, oder auch ein Copolymeres des Styrol-Typs oder ein Gemisch verwendet werden, welches eine syndiotaktische Struktur in Kombination mit ataktischer und/oder isotaktischer Struktur hat. Ferner können die syndiotaktischen Homopolymeren des Styrol-Typs auch Gemische mit anderen als den vorgenannten Polymeren umfassen. In Gemischen mit anderen Polymeren die nicht Homopolymere vom syndiotaktischem Polystyrol-Typ sind, sind die Mengen solcher anderer Polymeren beschränkt auf einen Bereich von 0,1 bis 10 Gew.-%, bevorzugt auf 1 bis 10 Gew.-% und besonders bevorzugt auf 3 bis 10 Gew.-%. Ist der Anteil dieser Polymere gering, so haben sie keine Wirkung. Ist er zu hoch, so reduzieren sie die Wirkung der Homopolymere vom syndiotaktischem Polystyrol-Typ zu stark. Besonders bevorzugt ist die Verwendung von reinem syndiotaktischem Polystyrol.

Erfindungsgemäß hat das wenigstens eine Homopolymer des Styrol-Typs ein Gewichtsmittel des Molekulargewichts von mindestens 10.000, vorzugsweise mindestens 50.000. Bei Verwendung von Homopolymeren mit einem Gewichtsmittel des Molekulargewichts von weniger als 10.000 kann man keine verstreckten Folien mit hohen Reckeigenschaften und einer ausgezeichneten Wärmebeständigkeit herstellen. Die obere Grenze des Gewichtsmittels des Molekulargewichtes, obwohl nicht besonders begrenzt, liegt vorzugsweise bei 1.500.000. Molekulargewichte mit mehr als 1.500.000 werden nicht besonders bevorzugt, da Folienrisse wegen der Zunahme der Orientierungsspannung auftreten.

Die erfindungsgemäße Folie ist eine simultan biaxial verstreckte Folie. Das heißt, dass Recken in Längsrichtung und in Querrichtung findet zumindest teilweise, bevorzugt vollständig gleichzeitig statt. Die Längsrichtung ist die Richtung in die die Folie ursprünglich extrudiert wurde und wird im Folgenden mit auch mit "MD" abgekürzt (MD = machinery direction). Die Querrichtung steht senkrecht darauf und wird im Folgenden mit auch mit "TD" abgekürzt (TD = transverse direction). Die Dicke d bildet die dritte Dimension. Simultan biaxial verstreckte Folien weisen neben ausgezeichneten mechanischen Eigenschaften einen verringerten Wärmeschrumpf bei hohen Temperaturen und gute Selbstheilungseigenschaften auf. Insbesondere weist die erfindungsgemäße Folie bevorzugt bei 130°C einen Wärmeschrumpf von 5 % oder weniger in Längsrichtung und 3 % oder weniger in Querrichtung auf. Besonders bevorzugt weist Sie bei 130°C einen Wärmeschrumpf von 3 % oder weniger in Längsrichtung und 1 % oder weniger in Querrichtung auf. Ein hoher Wärmeschrumpf in Querrichtung kann bei hohen Temperaturen zu einer schlechten Kontaktierung führen, während ein hoher Wärmeschrumpf in Längsrichtung bei hohen Temperaturen zu einem hohen Druck in Folienkondensatoren führen kann, wodurch die Selbstheilung negativ beeinflusst wird. Besonders bevorzugt ist eine erfindungsgemäße Folie gemäß einem der vorangehenden Ansprüche, dadurch gekennzeichnet, dass der Wärmeschrumpf eines daraus hergestellten Folienkondensator nach Wärmebehandlung bei 130°C 3 % oder weniger beträgt.

Die Dicke der erfindungsgemäßen Folie liegt üblicherweise in einem Bereich von 1 bis 100 µm, bevorzugt in einem Bereich von 1 bis 40 µm, besonders bevorzugt in einem Bereich von 1 bis 20 µm und ganz besonders bevorzugt in einem Bereich von 4 bis 12 µm. Mit anderen Worten sollte also die Foliendicke insbesondere größer als 0,5 µm, insbesondere größer als 1 µm, 1,5 µm, 2 µm, 2,5 µm, 3 µm, 3,5 µm, 4 µm, ≥ 4,5 µm sein. Andererseits sollte die Foliendicke kleiner als 100 µm, insbesondere kleiner als 90 µm, 80 µm, 70 µm, 60 µm, 50 µm, 40 µm, 30 µm, 20 µm und insbesondere kleiner als 12 µm sein. Folien mit geringen Dicken erlauben die Herstellung von Kondensatoren mit hoher Kapazität, haben jedoch möglicherweise eine geringere Spannungsfestigkeit. Ist die Dicke zu gering, so sind die mechanischen Eigenschaften und damit die Verarbeitbarkeit und die Selbstheilungseigenschaften ungenügend. Ist sie zu groß, so ist ebenfalls die Verarbeitbarkeit bei der Herstellung von Folienkondensatoren unzureichend. Außerdem können die Folien bei zu großer Dicke nicht mehr sinnvoll in Kondensatoren eingesetzt werden. Die erfindungsgemäße Folie ist bevorzugt dadurch gekennzeichnet, dass sie bei Raumtemperatur eine durchschnittliche elektrische Durchschlagfestigkeit von wenigstens 400 V/mm, bevorzugt wenigstens 430 V/mm, besonders bevorzugt von wenigstens 450 V/mm und ganz besonders bevorzugt von wenigstens 460 V/mm aufweist.

In einer weiteren Ausführungsform der vorliegenden Erfindung ist die erfindungsgemäße Folie dadurch gekennzeichnet, dass diese eine Oberflächenrauheit Ra, gemessen nach DIN EN ISO 4287, von höchsten 0,5 µm, bevorzugt von höchstens 0,4 µm, besonders bevorzugt von höchstens 0,1 µm und am meisten bevorzugt von 0,02 bis 0,06 µm.

### Folienkondensator und insbesondere Hochtemperaturkondensator

Zur Verwendung in Folienkondensatoren wird die erfindungsgemäße Folie zumindest auf einer Seite mit einer Metallschicht versehen. Der geringe Wärmeschrumpf in MD der erfindungsgemäßen Folie reduziert dabei die Gefahr, dass im Betrieb des Kondensators unter hohen Temperaturen (>100°C) der Druck im Wickelelement zu hoch wird und dadurch die Selbstheilungseigenschaften verschlechtert werden. Bei dem Metall handelt es sich bevorzugt um Aluminium. Beliebige andere Metalle, die üblicherweise für diesen Zweck verwendet werden können, sind ebenfalls geeignet, insbesondere Kupfer und Silber. Die Dicke der Metallschicht ist vorteilhaft so eingestellt, dass die Folie eine Leitfähigkeit von wenigstens 0,1 Ohm/mm², bevorzugt von wenigstens 0,5 Ohm/mm² und besonders bevorzugt wenigstens 1 Ohm/mm2 aufweist. Leitfähigkeiten bis zu 50 Ohm/mm² sind bevorzugt.

Verfahren zum Metallisieren von Kunststofffolien sind dem Fachmann bekannt. Sie können prinzipiell durch Vakuum-Metallisierung, indirekte Metallisierung, zum Beispiel durch Heißfolienprägung, Plattieren und Lackieren erfolgen. Bevorzugt ist die Vakuum-Metallisierung, da sie keine besonderen Eigenschaften oder Vorbereitungen der Folien erfordert und keine oder fast keine Hilfsstoffe benötigt. Die Vakuum-Metallisierung kann entweder durch Standard-Vakuum Metallisierung (Physical Vapor Deposition) oder durch Sputtern (Plasma Enhanced Chemical Vapor Deposition, PE-CVD) durchgeführt werden. Bei der Verwendung von Aluminium wird vorteilhaft die Standard-Vakuum Metallisierung angewendet.

Ein weiterer Aspekt der vorliegenden Erfindung betrifft die Verwendung der erfindungsgemäßen Folien zur Herstellung von Kondensatoren. Die erfindungsgemäßen Folien sind gut verarbeitbar und die Metallschicht haftet gut darauf. Sie sind daher zur Herstellung von Kondensatoren gut geeignet.

Ein weiterer Aspekt der vorliegenden Erfindung betrifft einen Folienkondensator umfassend eine erfindungsgemäße Folie. Auf Grund der Eigenschaften der erfindungsgemäßen Folie hat der erfindungsgemäße Folienkondensator besonders vorteilhafte Eigenschaften. Er kann als Hochtemperaturkondensator und damit bei Temperaturen von 110°C oder mehr eingesetzt werden. Er weist auch bei hohen Temperaturen eine lange Lebensdauer, bei nur geringfügig geänderter Kapazität auf. Er hat außerdem hervorragende Selbstheilungseigenschaften. Dies drückt sich darin aus, dass sein Wärmeschrumpf nach Wärmebehandlung bei 130°C 4 % oder weniger, bevorzugt 3 %, besonders bevorzugt 2 % oder weniger und ganz besonders bevorzugt 1 % oder weniger beträgt. Ebenfalls bevorzugt ist ein erfindungsgemäßer Folienkondensator der dadurch gekennzeichnet ist, dass sein Wärmeschrumpf nach Wärmebehandlung bei 140°C 5 % oder weniger beträgt. Die Kapazitätsstabilität der erfindungsgemäßen Kondensatoren ist ausgezeichnet. Die Änderung der Kapazität über den Temperaturbereich von - 55°C bis 155°C beträgt maximal 5 %, bevorzugt maximal 4 % und besonders bevorzugt maximal 3 %. Der Verlustfaktor ist niedrig. Bei hohen Temperaturen ist ein leichter Anstieg zu verzeichnen, er beträgt jedoch maximal 0,0100, bevorzugt maximal 0,0050, besonders bevorzugt maximal 0,0010 und am meisten bevorzugt maximal 0,0005. Dies erlaubt die Verwendung der erfindungsgemäßen Kondensatoren für hohe Ströme. Die Durchschlagsfestigkeit in einem Temperaturbereich von 25°C-155°C beträgt wenigstens 200 V/µm, bevorzugt wenigstens 250 v/pm, besonders bevorzugt wenigstens 300 V/µm und ganz besonders bevorzugt wenigstens 320 V/µm.

Der erfindungsgemäße Folienkondensator weist auch bei hohen Temperaturen einen hohen Isolationswiderstand auf. Bevorzugt liegt der Isolationswiderstand im Temperaturbereich von 25°C bis 155 °C bei wenigstens 15.000 MOhm, besonders bevorzugt bei wenigstens 20.000 MOhm und ganz besonders bevorzugt bei wenigstens 22.000 MOhm. Am meisten bevorzugt ist ein erfindungsgemäßer Folienkondensator, der dadurch gekennzeichnet ist, dass der Isolationswiderstand in einem Temperaturbereich von 25°C bis 155 °C bei 22.000 bis 40.000 MOhm liegt.

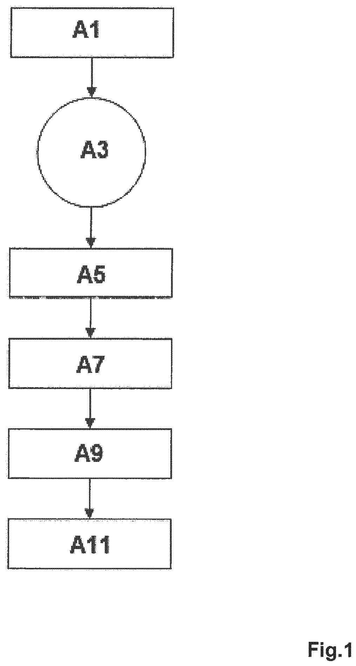

Die vorliegende Erfindung betrifft ein Verfahren zur Herstellung einer erfindungsgemäßen Folie. Die entsprechenden Verfahrensschritte A1 bis A11 sind schematisch in Figur 1 dargestellt. Die Herstellung der erfindungsgemäßen Folie umfasst dabei die folgenden Schritte:
- Schmelzen des Polymers (in Figur 1 nicht separat dargestellt oder teilt den der unmittelbaren Extrusionen vorgelagerten Prozess, beispielsweise unter Verwendung einer Extruderschnecke),
- Extrudieren des Polymers aus einer Breitschlitzdüse unter Herstellung einer Schmelze (Schritt A1 in Figur 1),
- Kühlen der entstandenen Schmelze auf einer Kühlwalze (Chillroll) unter Herstellung eines Castfilms (Schritt A3 in Figur 1),
- Zugtrennung des Films zwischen Kühlwalze (Chillroll) und Reckofen (Schritt A5 in Figur 1),
- Simultanes Recken des Films in Längsrichtung (MD) und in Querrichtung (TD) (Schritt A7 in einem Simultanreckwerk),
dadurch gekennzeichnet,
dass Gemische von Homopolymeren vom syndiotaktischen Polystyrol-Typ mit Polymeren die nicht Homopolymere vom syndiotaktischen Polystyrol-Typ sind, die Polymere die nicht Homopolymere vom syndiotaktischen Polystyrol-Typ sind in einer Menge im Bereich von 0,1 bis 10 Gew.-% der Gemische enthält und dadurch,
dass die Kühlwalze auf eine Temperatur im Bereich von 70 bis 130°C eingestellt wird.

An diese vorstehend genannten Schritte schließt sich üblicherweise zur Verbesserung der Filmeigenschaften noch eine sogenannte Relaxationsphase an, in der beispielsweise ein optionales Annealing und gegebenenfalls auch noch ein Relaxieren der Folie in Querrichtung und/oder in Maschinenlängsrichtung stattfinden kann.

Anschließend daran werden in der Regel die folgenden weiteren Verfahrensschritte durchgeführt:
- Abzug der entstandenen Folie aus der Reckanlage (Schritt A9 in Figur 1), und
- Wickeln der Folie (beispielsweise auf einem Wickler - Verfahrensschritt A11 in Figur 1).

Zur Erzeugung der Schmelze wird in der Regel ein Doppelschneckenextruder verwendet. Dieser sollte mindestens einen Vakuum- oder Entgasungsdom aufweisen. Er kann jedoch auch einen zweiten Vakuum- oder Entgasungsdom aufweisen. Es können jedoch auch andere Extruder-Typen verwendet werden, zum Beispiel ein Kaskadenextruder oder auch ein einfacher Einschneckenextruder oder auch ein Planetwalzenextruder. Die Schmelze wird bevorzugt durch eine Einlagendüse extrudiert.

Als Einlagendüse wird bevorzugt ein Breitschlitzverteiler verwendet. Der Breitschlitzverteiler ist bevorzugt ausgewählt aus der Gruppe bestehend aus T-Verteiler, Fischschwanzverteiler und Kleiderbügelverteiler. T-Verteiler und Kleiderbügelverteiler sind besonders bevorzugt. Der Vorteil der Kleiderbügelverteiler ist ein gleichmäßiger Druck innerhalb der Düse, woraus eine optimale Druckverteilung resultiert. T-Verteiler sind besonders preisgünstig und eine optimale Druckverteilung kann durch interne Anpassung verbessert werden.

Es wird so ein Schmelzfilm erzeugt, der bevorzugt eine Dicke von 50 bis 350 µm, besonders bevorzugt von 100 bis 250 µm aufweist. Der Film weist darüber hinaus bevorzugt Ränder mit größerer Dicke auf, die beim Recken der aus dem Film durch Kühlen entstehenden Folie von Kluppen ergriffen werden, um die Folie durch eine Simultanreckanlage hindurchbewegen und Recken zu können. Die beim Recken der Folie verwendeten Greifwerkzeuge (Kluppen) verursachen eine mechanische Beanspruchung der Folie, die bei dünnen Folien zu undefinierten Dehnungen, Verformungen oder auch zu Löchern führen kann, die wiederum die mechanischen und elektrischen Eigenschaften der Folie negativ beeinflussen können oder sogar zu sogenannten Filmrissen führen können. Man spricht von einem Filmriss, wenn die Folie beim verstrecken im Ofen, d.h. der Simultanreckanlage, reißt. Die Dicke der Ränder kann in einfacher Weise durch Optimierungsversuche bestimmt werden. Wenn die Folie durch die mechanische Beanspruchung nicht mehr verformt wird und die Eigenschaften nicht mehr merklich beeinflusst werden, sind die Ränder dick genug. Die Ränder sollten dabei andererseits so dünn wie möglich gewählt werden, weil sie sonst auf der Kühlwalze nicht in genügendem Maße gekühlt werden können. Die Ränder werden nach dem Verstrecken bevorzugt vor dem Aufrollen oder dem Weiterverarbeiten der Folie abgeschnitten.

Die Breite der Schmelze bei Austritt aus der Düse kann z.B. 50 bis 1000 mm betragen. Bevorzugt liegt die Breite in einem Bereich von 200 bis 600 mm. Auch Breiten von mehr als 1000mm sind herstellbar.

Das Kühlen erfolgt, indem die Schmelze mit einer Kühlwalze in Kontakt gebracht wird. Durch das Kühlen entsteht aus der Schmelze ein Castfilm. Die Kühlwalze hat in der Regel eine Temperatur im Bereich von 70 bis 130°C, bevorzugt im Bereich von 70 bis 100°C, besonders bevorzugt in einem Bereich von 80 bis 95°C und am meisten bevorzugt in einem Bereich von 80 bis 90°C. Naturgemäß muss die Temperatur der Kühlwalze auf die Temperatur, die Viskosität und die Dicke der Schmelze abgestimmt sein. Bevorzugt ist daher ein erfindungsgemäßes Verfahren, das dadurch gekennzeichnet ist, dass die Kühlwalze auf eine Temperatur ≥ 70°C, 75°C, 80°C, 85°C und insbesondere ≥ 90°C und/oder eine ≤ 130°C, insbesondere ≤ 125°C, 120°C, 115°C, 110°C, 105°C, 100°C und insbesondere ≤ 95°C eingestellt wird und vorzugsweise auf eine Temperatur zwischen 80°C und 100°C, insbesondere zwischen 85°C und 95°C bzw. 90°C und 95°C eingestellt wird. Ist die Kühlwalze auf zu tiefer Temperatur eingestellt, fördert dies die Kristallisation und Versprödung des Films, was zu Rissen in der Folie und zum Abreißen der Folie während Herstellung und Verarbeitung führen kann. Ist die Temperatur der Kühlrolle zu hoch, so hat die Folie mangelnde mechanische Eigenschaften und verformt sich während der Herstellung.

Um die Schmelze an der Kühlwalze möglichst perfekt anlegen zu können, wird bevorzugt ein elektrostatisches Aufladungsverfahren (E-Pinning) verwendet. Bevorzugt ist daher ein erfindungsgemäßes Verfahren, das dadurch gekennzeichnet ist, dass die Adhäsion der Schmelze auf der Kühlwalze durch ein elektrostatisches Aufladungsverfahren unterstützt wird. Anders ausgedrückt ist ein erfindungsgemäßes Verfahren bevorzugt, dass dadurch gekennzeichnet ist, dass das Anlegen der Folie auf der Kühlwalze durch ein elektrostatisches Aufladungsverfahren unterstützt wird.

Im Vergleich zum herkömmlichen Anlegen mit einem Luftmesser hat dies den Vorteil, dass keine Bewegung der Schmelze beim Anlegen an die Kühlwalze stattfindet. Dies gilt insbesondere im Randbereich. Ferner wird der Rand weniger spröde als bei Verwendung eines Luftmessers. Vor allem aber bewirkt das E-Pinning ein schnelles und direktes Anlegen der Schmelze nach Austritt aus der Düse. Das elektrostatische Aufladungsverfahren wird vorteilhaft durch ein Ein-Draht / Doppel-Draht oder Band realisiert. Dies führt dazu, dass die Schmelze schnell und mit einem besseren Kontakt zwischen Schmelze und Kühlwalze angelegt wird, was zu einer schnelleren und verbesserten Kühlung führt. Dadurch werden Kristallisation und Versprödung des Films reduziert. Auch ist es vorteilhaft, wenn Düse und Kühlwalze so angeordnet sind, dass die Austrittrichtung der Düse und die Tangente auf der Oberfläche der Kühlwalze, die der Austrittsöffnung am nächsten liegt, einen Winkel von etwa 30° aufweisen, damit die Schmelze so nah wie möglich an die Kühlwalze angelegt werden kann.

Ferner ist ein erfindungsgemäßes Verfahren bevorzugt, das dadurch gekennzeichnet ist, dass das Anlegen der Ränder der Folie auf der Kühlwalze durch auf die Ränder der Folie gerichtete Luftdüsen (sogenannte "Edge Pipes") unterstützt wird. Dies führt dazu, dass die Ränder schneller an die Kühlwalze angelegt werden um diese zu rascher zu gleichmäßiger zu kühlen und das frühzeitige Auskristallisieren zu vermeiden. Besonders bevorzugt werden diese Luftdüsen bei Folien eingesetzt, die dickere Ränder aufweisen. Bevorzugt werden die Luftdüsen zusätzlich zum E-Pinning verwendet. Die Verwendung von Luftdüsen erfolgt dann direkt hinter dem E-Pinning und hat in der Regel den Effekt, dass die Kristallisation im Randbereich der Folie unterbleibt oder verlangsamt wird, was die Verarbeitbarkeit der Folie verbessert.

Es bereits darauf hingewiesen worden, dass jede Folie an ihren beiden gegenüberliegenden Längsseiten einen Rand, den sogenannten Folienrand, aufweist, an den die Kluppen die Folie ergreifen und transportieren und dabei vor allem im Falle der Simultanreckung die Folie auch in Längs- und in Querrichtung recken. Dieser Rand oder Folienrand weist dabei eine größere Foliendicke auf, verglichen mit der Foliendicke des zwischen den Rändern befindlichen Folienmaterials. Mit anderen Worten sind die Folienränder dicker als die Folienmitte. Häufig wird dieses Querschnittsprofil einer Folie auch als Knochenprofil bezeichnet, welches sich durch einen dickeren Folienquerschnitt im Folienrandbereich ausweist, verglichen mit dem dazwischen befindlichen Folienabschnitt, der allgemein auch als Folienmitte bezeichnet wird. Dieser mittlere Folienabschnitt ist also dünner verglichen mit dem Folienrand.

Um den entstandenen Castfilm von der Kühlwalze dem Ofen zuzuführen existieren verschiedene Methoden, die alle eine effektive Zugtrennung ermöglichen müssen, um spannungsinduzierte Risse im Film zu vermeiden. Eine Möglichkeit ist es den Film in bekannter Weise über Walzen vor den Ofeneinlauf zu führen, allerdings ist dies nicht möglich, wenn der Film zu spröde ist, insbesondere an den (dickeren) Rändern. Überraschenderweise hat sich ergeben, dass keine Risse entstehen, wenn der Film über eine bestimmte Anzahl von Walzen (10-20) geführt wird, welche einen Durchmesser von 100mm bis 1000mm besitzen. Hierdurch ist eine effektive Zugtrennung möglich. Eine Möglichkeit wäre hier beispielsweise eine MD-Reckanlage zu verwenden, wobei keine Verstreckung durchgeführt wird, sondern nur die Walzenanordnung und Walzenoberfläche den entscheidenden Vorteil der effektiven Zugtrennung bringt. Eine andere Möglichkeit ist, den Film nach Auslauf aus der Casting Unit (nach der Kühlwalze) und dem Ofeneinlauf des Reckofens "durchhängen" zu lassen, d.h. möglichst wenig Spannung auf den Film zu bringen. Dadurch werden spannungsinduzierte Risse im Film vermieden. Bei dieser Methode darf der Ofeneinlauf nicht zu stark ruckeln, da sonst wiederrum Mikrorisse entstehen und dies beim Verstrecken zu Filmrissen führen kann.

Das Recken des Films kann grundsätzlich in zwei Schritten durchgeführt werden, nämlich zunächst in Längsrichtung und anschließend in Querrichtung. Das erfindungsgemäße Verfahren ist jedoch dadurch gekennzeichnet, dass das Recken des Films in Längsrichtung und in Querrichtung zumindest teilweise und bevorzugt vollständig simultan erfolgt. Polymere vom syndiotaktischen Polystyrol-Typ neigen zur schnellen Kristallisation, im Gegensatz zu isotaktischen Polystyrol. Dies hat große Vorteile bei der Verwendung solcher Polymere in Folien, insbesondere in Folien für elektrische Bauteilen. Solche Folien haben beispielsweise eine hohe Dielektrizitätskonstante sind hochtemperaturfest und haben gute mechanische Eigenschaften. In der der mittels Extrusion erzeugten Folie finden sich sowohl kristalline als auch amorphe Bereiche. Amorphe Bereiche sind ungeordnete Molekülstrukturen, die bei der Verstreckung nur bedingt orientiert werden. Amorphe Bereiche stellen naturgemäß Fehlstellen dar, welche die elektrischen Eigenschaften negativ beeinflussen können. Die Folie kann dadurch Ihre hohe Durchschlagspannung, insbesondere bei hohen Temperaturen und ihre Wärmebeständigkeit verlieren. Durch simultanes Recken wird eine Folie erzeugt, die eine ausgeprägte Kristallitstruktur aufweist, so dass insbesondere die Durchschlagsspannung bei Betriebstemperaturen von 100°C oder mehr nicht negativ beeinflusst wird.

Das Reckverhältnis in Längsrichtung und in Querrichtung beträgt jeweils bevorzugt 1 bis 5 oder 2,5 bis 5 und besonders bevorzugt 3 bis 5 und ganz besonders bevorzugt 3 bis 4,5. Bei diesem Reckverhältnis sind die elektrischen und mechanischen Eigenschaften der Folie optimiert. Dabei sind biaxial orientierte Folien, welche mittels Simultanreckverfahren hergestellt wurden bevorzugt.

### Aufbau einer Simultan-Reckanlage

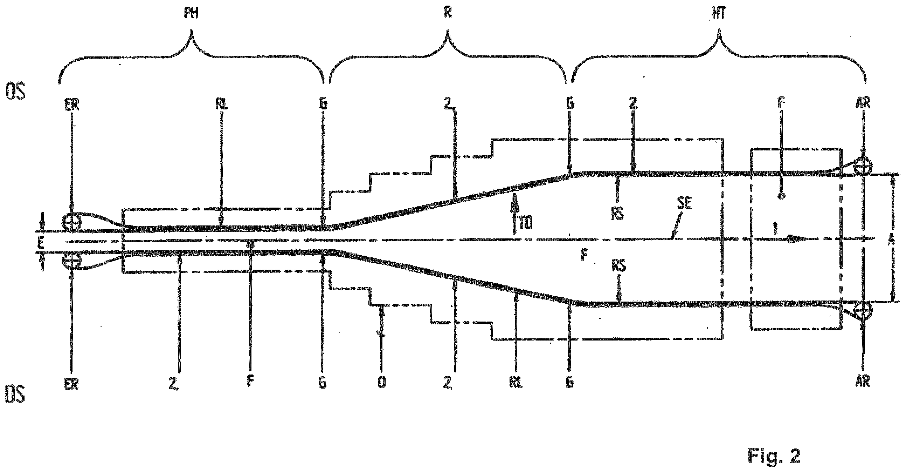

Eine Simultan-Reckanlage weist zwei symmetrisch ausgebildete Antriebssysteme auf, die symmetrisch zu einer mittleren, vertikal zur Folienebene verlaufenden Symmetrie-Ebene SE liegen. In Figur 2 sind die beiden symmetrisch zur Symmetrieebene SE in Abzugsrichtung 1 angeordneten Antriebssysteme eingezeichnet, wobei zwischen den beiden auf geschlossenen Bahnen 2 umlaufenden Antriebssystemen die zu behandelnde, d.h. zu reckende Materialbahn insbesondere in Form eines Kunststofffilms F längs der Abzugsrichtung 1 hindurch bewegt wird, wozu Kluppen verwendet werden, die den Filmrand ergreifen und den Film durch die Reckanlage hindurchbewegen.

Grundsätzlich wird aus der Düse oder Extruderdüse die Kunststoff-Schmelze gegeben, und zwar auf eine Kühlwalze, die auch als Chillroll bezeichnet wird. Sobald der Film die Kühlwalze (Chillroll) verlässt, hat sich ein sogenannter "Castfilm" gebildet, der dann üblicherweise in einen Ofen zur Temperierung des Filmes einläuft. Danach wird üblicherweise nicht mehr von einem "Castfilm" sondern nur noch von einem "Film" oder "Kunststofffilm" gesprochen. Am Ende des gesamten Reckprozesses und in der Regel nach Durchführung einer Relaxationsphase, wenn also der Film vollständig verstreckt ist und aus dem Ofen kommt und auf einem Wickler aufgewickelt wird, wird häufig nur noch von "Folie" gesprochen.

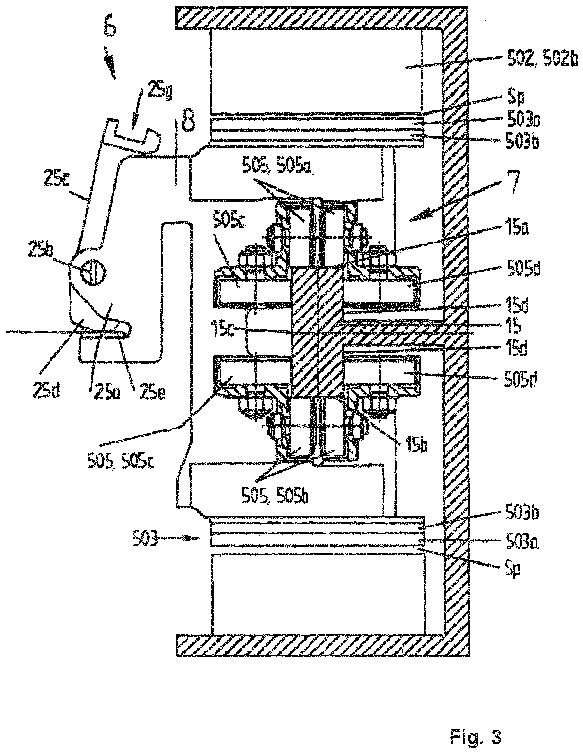

Eine unverstreckte Folie F läuft in einem Einlaufbereich ER in die Reckanlage ein und wird dort auf der Reck- oder Prozessseite RS von Kluppen, wie sie beispielsweise anhand von Figur 3 gezeigt sind, an beiden Rändern 8 ergriffen und eingeklemmt, und zwar auf der sogenannten Operator-Seite (OS operator side) sowie der antriebsseitigen Drive-Seite (DS drive side). Die Folie F wird dann in einer nachfolgenden Vorheizzone PH erwärmt und nachfolgend einer Reckzone R zugeführt, um hier simultan in Längs- und Querrichtung verstreckt zu werden. Dabei werden die Kluppen gegenüber der Antriebsgeschwindigkeit v1 im Einlaufbereich auf eine höhere Reckgeschwindigkeit v2 beschleunigt, um den Kunststofffilm gleichzeitig in Längs- und Querrichtung zu recken. Dabei werden die Kluppen auf divergierenden Bahnabschnitten voneinander weg bewegt, wobei der Abstand x zwischen zwei aufeinanderfolgenden Kluppen wie aber auch der Abstand y zwischen den Kluppen zunimmt, wie sie auf den zugehörigen Bahnen auf der Drive-Seite zum einen und auf der Operator-Seite zum anderen verfahren werden, also der Abstand y zwischen den gegenüberliegenden Seitenrändern des Kunststofffilms zunimmt. Mittels Gelenken G kann der Verlauf der Führungsbahn 2 vor allem im Bereich der Reckzone entsprechend den gewünschten und optimalen Vorgaben eingestellt werden. Die Führungsschienen können ferner durch einen Ofen O verlaufen.

Die Abstände x und y werden dabei im Verhältnis der gewünschten Reckverhältnisse in Längs- und Querrichtung vergrößert. Am Ende des zweiten Schritts hat die Folie eine Geschwindigkeit v2, die über der Geschwindigkeit v1 liegt.

Anschließend durchläuft der verstreckte Film F in einem dritten Schritt zumindest eine Wärmebehandlungszone HT, d.h. eine sogenannte Annealingzone, in der eine Relaxierung erfolgen kann. Dazu wird die Geschwindigkeit v2 verlangsamt und so der Abstand x von jeweils aufeinander folgenden Kluppen verringert. Gleichzeitig kann der Abstand y von gegenüberliegenden Kluppen verringert werden. Die Geschwindigkeiten werden dabei im Ausmaß der gewünschten Relaxierung verringert.

Während der Wärmebehandlung wird der Film vorteilhaft einer Entspannung (Relaxierung) unterzogen. Diese Relaxierung kann in Längsrichtung, in Querrichtung oder in beiden Richtungen vorgenommen werden. Bevorzugt wird sie sowohl in Längs- als auch in Querrichtung vorgenommen. Bevorzugt ist daher ein erfindungsgemäßes Verfahren, das dadurch gekennzeichnet ist, dass nach dem simultanen Recken eine Relaxierung in Längsrichtung oder in Querrichtung oder in beiden Richtungen vorgenommen wird. Dies bedeutet, dass der Film erlaubt wird, kontrolliert zu schrumpfen. Der Umfang der Relaxierung beträgt üblicherweise zwischen 2 % und 12 %, bevorzugt zwischen 4 % und 8 % und ganz besonders bevorzugt 5 % bis 7 %, jeweils von der Länge und/oder der Breite der Film.

Am Auslaufende AR der Reckanlage, d.h. am Ende der sogenannten Auslaufzone A, wird der Film durch geeignete Mittel ausgekluppt und verlässt dann die Simultan-Reckanlage.

Nachfolgend wird auf Figur 3 Bezug genommen, in welcher eine Querschnittsdarstellung einer linearmotorgetriebenen Simultan-Reckanlage mit einem zugehörigen Kluppen- und Transportteil beispielhaft gezeigt ist. Allerdings sind auch andere Ausführungsformen möglich, um die erfindungsgemäße Folie herzustellen. Es wird insoweit auf noch weitere bekannte Lösungen verwiesen.

Aus Figur 3 ist also eine Kluppen-Transporteinheit T zu ersehen, welche ein sogenanntes Kluppenteil 6 und das sogenannte Transportteil 7 umfasst. Das Kluppenteil 6 ist mit dem Transportteil 7 über eine sogenannte Brücke 8 verbunden. Je nach Sichtweise kann die Kluppen-Brücke 8 zum Transport- oder zum Kluppenteil hinzugerechnet werden.

Das Kluppenteil umfasst wie üblich einen um eine Kluppenachse 25b verschwenkbaren Kluppenhebel 25c, der teilweise auch als Messerklappe 25c bezeichnet wird. Im Falle einer Folienreckanlage wird ein Film F zwischen der Greiffläche 25d und einem Kluppentisch 25e fixiert, d.h. eingeklemmt und festgehalten.

Ein U-förmig geformtes Magnetschlussteil 25g sorgt für das Öffnen und Schließen des Kluppenhebels und damit für das Einklemmen bzw. Freilassen des Films zusammen mit einer entsprechenden nicht dargestellten Einrichtung nach dem Stand der Technik. Abweichend zu dem erwähnten Magnetschlussteil kann die Fixierung des Films durch den Kluppenhebel aber auch mechanisch erfolgen. D.h. das Öffnen und Schließen erfolgt rein mechanisch.

Der eigentliche Aufbau der linearmotorgetriebenen Simultan-Reckanlage mit dem entsprechenden Linearmotorantrieb ist beispielsweise aus der EP 0 455 632 B1 oder der DE 44 36 676 C2 als bekannt zu entnehmen, auf deren Offenbaungsgehalt in vollem Umfang Bezug genommen wird. Die anhand von Figur 2 im Querschnitt gezeigte Darstellung gibt die Führungs- und Tragschiene 15 wieder.

Im erläuterten Ausführungsbeispiel laufen auf jeder Lauffläche jeweils zumindest ein Paar von Laufrollen 505, nämlich ein oben liegendes Laufrollenpaar 505a, die um eine Horizontalachse drehen und auf einer nach oben weisenden Lauffläche 15a abrollen. Über dieses Laufrollenpaar wird das gesamte Gewicht des zugehörigen Transportteiles mit dem damit verbundenen Kluppenteil aufgenommen und abgestützt.

Ein auf der unteren Lauffläche 15b abrollendes Rollenpaar 505b dient lediglich der Lauf-Sicherheit.

Schließlich ist auch noch auf der Kluppenseite ein Rollenpaar 505c und gegenüberliegend ein Rollenpaar 505d vorgesehen, das an den betreffenden vertikalen Laufflächen 15c und 15d abrollt. Darüber ist das Transportteil 7 geführt und gelagert. Die entsprechende Führungsschiene 15 ist über mehrere in Längsrichtung der Führungsschiene versetzt liegende Horizontalträger in Abständen gehalten, die jeweils in dem kluppenabseitig liegenden Freiraum 401 zwischen dem oberen und unteren Laufrad 505d verlaufen und mit der Führungsschiene fest verbunden sind.

Das entsprechende Transportteil wird über Linearmotoren angetrieben, die ortsfeste Primärteile 502 und mit den Kluppen-Transportteilen T mitbewegliche Sekundärteile 503 umfassen. Mit anderen Worten werden längs der Führungsschiene 15, die hier auch als Transportschiene 15 gleichzeitig dient (Monorail), die Kluppen, also die Kluppe 6, mit den Transportteilen 7 mittels der Primärteile 502 und der Sekundärteile 503 längs verfahren und bewegt.

Die erwähnten Primärteile 502 sind parallel zur Führungs- und Tragschiene 15 angebracht. Die Sekundärteile 503 bestehen aus den erwähnten Permanentmagneten 503a, die in einem jeweiligen Haltekäfig 503b befestigt sind, der wiederum an dem Kluppenkörper 6 gehalten ist.

Wie aus Figur 3 zu ersehen ist, ist zwischen dem Primär- und Sekundärteil 502, 503 ein (geringer) Abstandsspalt Sp ausgebildet, über welchen hinweg die vom Primärteil erzeugten elektromagnetischen Wellen auf den Permanentmagneten 503a am Transportteil einwirken und dadurch das Transportteil in Vorschubrichtung bewegen.

Abweichend von den geschilderten Rollen, worüber die Kluppen-Transportteile T längs des Verfahrweges bewegt werden, könnte grundsätzlich auch anstelle einer Rollenlagerung eine Gleitlagerung unter Verwendung entsprechender Gleitelemente vorgesehen sein. Auch kombinierte Systeme mit Rollen- und Gleitlagerung sind möglich. Auch hier wird auf bekannte Lösungen verwiesen.

Das Recken der Folie erfolgt also z.B. mit einer derartigen linearmotorangetriebenen Simultan-Reckanlage. Besonders bevorzugt wird das simultane Recken mit Hilfe einer Simultan-Reckanlage und mittels eines Verfahrens hergestellt, wie dies z.B. in der DE 10 2014 013 901 A1 beschrieben ist.

Abweichend von dem bevorzugt verwendeten Linearmotorantrieb kann auch eine Simultanreckanlage verwendet werden, die mittels eines Pentagraph-Systems arbeitet. Es wird insoweit auf bekannte Lösungen verwiesen.

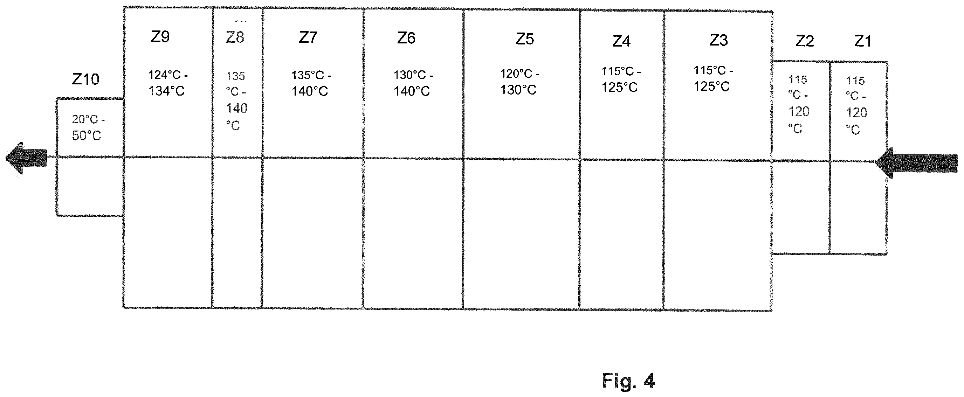

In einer derartigen Reckanlage wird dann das Recken bevorzugt in einem Temperaturbereich von 100°C bis 150°C, und besonders bevorzugt in einem Temperaturbereich von 110°C bis 135°C durchgeführt. Figur 4 zeigt ein geeignetes Temperaturprofil für den Ofen einer Reckanlage. Der Ofen ist in 9 Heizzonen und eine Kühlzone eingeteilt. In jeder Zone ist jeweils der für das vorliegende Verfahren bevorzugte Temperaturbereich eingetragen. Es können auch andere Öfen mit mehr oder weniger Heizzonen verwendet werden. In diesem Fall müssen die Temperaturen gegebenenfalls geeignet angepasst werden.

### Beispiele:

### Beispiel 1:

### Herstellen einer simultan biaxial verstreckten Folie aus syndiotaktischen Polystyrol

Ein syndiotaktisches Polystyrol (sPS XAREC 90ZC, Homopolymer, der Firma Idemitsu Kosan Co., Ltd., Tokyo, Japan) wird in einem Doppelschneckenextruder mit einem Vakuumdom auf eine Massetemperatur von 280°C bis 300°C erwärmt und dabei aufgeschmolzen. Das aufgeschmolzene Polymer tritt aus einer Einlagendüse, die als Kleiderbügelverteiler ausgeführt ist, mit 430 mm Breite und einer Höhe von 120-150 µm aus und wird über eine Kühlwalze geführt, die eine Temperatur von 92°C aufweist. Um das Anlegen des Films an die Kühlwalze zu unterstützen und die Adhäsion zu verbessern, wird eine elektrostatische Aufladung (E-Pinning) durch einen Doppeldraht verwendet. Anschließend wird die so entstandene Folie in einem Simultanreckofen gemäß Figur 4 gestreckt, wobei in den Zonen jeweils folgende Temperaturen eingestellt wurden: Zonen 1 und 2, 115°C bis 120°C, Zone 3 und 4, 115°C bis 125°C, Zone 5, 120°C bis 130°C, Zone 6 130°C bis 140°C, Zone 7 und Zone 8 135°C bis 140°C, Zone 9, 124°C bis 134°C. In der Kühlzone Z10 wurde eine Temperatur von 20°C bis 50°C eingestellt.

In Figur 4 ist der erläuterte Simultanreckofen in vertikaler Querschnittsdarstellung schematisch wiedergegeben, wobei der Film in Abzugsrichtung von rechts nach links durch den Simultanreckofen hindurchbewegt wird (die Filmebene liegt dabei senkrecht zur Zeichenebene).

Die Zonen Z1 bis Z9 sind dabei eingezeichnet. Ebenfalls angegeben ist der in den einzelnen Zonen bevorzugte Temperaturbereich, auf welchen in den einzelnen Zonen die entsprechende Erwärmung durchgeführt wird. Lediglich bei der Ausgangszone Z10 findet die erläuterte Kühlung auf 20°C bis 50°C statt.

Die Foliengeschwindigkeit durch den erläuterten Simultanreckofen betrug beispielsweise 22 m pro Minute, wobei ein Reckverhältnis von 3,0 in beiden Richtungen (Schienen- oder Abzugsrichtung und in Querrichtung dazu) eingestellt wurde. Die Relaxierung betrug 6% in beiden Richtungen (also in Abzugs- oder Maschinenrichtung sowie in Querrichtung).

In dem vorstehend genannten Verfahren werden ohne Zugtrennung Folienbahnen mit einer Länge von bis zu 500 Meter erhalten, bevor die Folien beim Recken abreißen. In weiteren Versuchen wurde hingegen zusätzlich eine Zugtrennung zwischen der Kühlwalze und dem Reckofen verwendet. Hierzu wurde der Film über insgesamt 12 Rollen geführt, (beispielsweise eine MD-Reckanlage, wobei keine Verstreckung durchgeführt wurde) was zu einer effektiven Zugtrennung führte. Ein Folienabriss unter 500 Meter trat dabei nicht mehr auf. Es wurden Folienbahnen mit einer Länge von bis zu 5000 Meter (typisch 4000 bis 5000 Meter) erhalten, bevor ein Folienabriss stattfand.

Es wurde eine Folie mit den in Tabelle 1 beschriebenen Eigenschaften erhalten:

**Tabelle 1:**

| | | Unit | Durchschnitt | Abweichung | Messmethode |
|---|---|---|---|---|---|
| Dicke | | µm | 10,93 | 0,36 | DIN 53370 |
| Zerreißfestigkeit | MD* | N/mm² | 89,4 | 8,4 | ASTM D 882 |
| | TD* | N/mm² | 93,5 | 9,1 | ASTM D 882 |
| Bruchdehnung | MD | % | 42,8 | 19,2 | ASTM D 882 |
| | TD | % | 18,9 | 6,9 | ASTM D 882 |
| Elastizitätsmodul | MD | N/mm² | 3620,9 | 88,8 | ASTM D 882 |
| | TD | N/mm² | 4768,7 | 63,0 | ASTM D 882 |
| F 5 - Wert | MD | N/mm² | 74,1 | 2,2 | ASTM D 882 |
| | TD | N/mm² | 81,1 | 1,3 | ASTM D 882 |
| Wärmeschrumpf 120/5 | MD | % | 2,7 | 1,04 | BMS TT |
| | TD | % | 0,07 | 0,12 | BMS TT |
| elektrische Durchschlagsfestigkeit | Median | V/µm | 466,4 | | DIN IEC 60243-2 |
| | Durch schnitt | V/µm | 392,9 | | DIN IEC 60243-2 |
| Anmerkungen | | | Bedingungen für Durchschlagsspannungsmessung: | | |
| | | | Gleichspannung: 500-8000 kV 200 V-Sekunden | | |
| | | | Elektrode: Platte - Kugel | | |

| | | | | | |
|---|---|---|---|---|---|
| *MD: Längsrichtung, TD: Querrichtung | | | | | |

Die verwendeten Messmethoden sind Standardmessmethoden.

BMS TT (Wärmeschrumpf) : Als Wärmeschrumpf im Sinne dieses Tests ist die Längenänderung Delta L eines Probekörpers (100mm x 100mm) durch Einwirken von Wärme zu verstehen. Dazu wird der Probekörper bei 120°C für 5 Minuten gelagert und anschließend wird der Schrumpf bestimmt. Er wird unter der Kurbezeichnung Delta L 120/5 in % angegeben.

Die folgende Tabelle 2 vergleicht die Rauheit der erfindungsgemäßen Folie im Vergleich mit einer nach dem gleichen Verfahren hergestellten Polypropylen-Folie. Die Werte wurden nach DIN EN ISO 4287 (taktile Rauheitsmessung) bestimmt.

**Tabelle 2:**

| Material | BOSPS | BOPP |
|---|---|---|
| Rₐ in µm | 0,04 | 0,06-0,1 |
| R_{z} in µm | 0,3 | 0,6-1 |
| Rₘₐₓ in µm | 0,4 | 0,6-1 |

Bei der BOSPS-Folie handelt es sich um eine biaxialorientierte sPS-Folie.

Wie zu sehen ist, ist die erfindungsgemäße Folie in der Rauheit einer Polypropylen-Folie überlegen. Dabei ist auch wichtig zu betonen, dass der erfindungsgemäße Film Eigenschaften aufweist oder Variationen bezüglich seiner Rauheit aufweisen kann, die sich in einem bestimmten Rauheitsfenster bewegen. Denn wenn die Folie zu glatt ist, kommt es zu Problemen beim Wickeln der Folie und beim Einsatz bei der Herstellung von Kondensatoren insbesondere Wickelkondensatoren (da der Raum zwischen den Folienlagen zu gering ist um eine effektive Selbstheilung stattfinden zu lassen).

Es sei hinzugefügt, dass in beiden vorstehend genannten Fällen kein Antiblock hinzugefügt wurde.

Tabelle 3 zeigt den Wärmeschrumpf in Prozent gemäß BMS TT bei verschiedenen Temperaturen nach 5 Minuten und 15 Minuten Lagerzeit (Delta L 120/5 und Delta L 120/15), wobei der vorstehende, in der Klammer angegebene Wert für 120/5 120°C bei 5 min und die Angabe 120/15 für 120°C bei 15 min steht.

**Tabelle 3:**

| | Zeitdauer | 110°C | 120°C | 130°C | 140°C |
|---|---|---|---|---|---|
| In Längsrichtung [%] | 5 min | 0,6 | 2,7 | 4,2 | 6,65 |
| In Längsrichtung [%] | 15 min | 0 | 1,1 | 3,25 | 5,75 |
| In Querrichtung [%] | 5 min | 0 | 0 | 0,6 | 2,6 |
| In Querrichtung [%] | 15 min | 0 | 0,5 | 1,9 | 3,25 |

Diese Daten zeigen, dass der Wärmeschrumpf in beiden Richtungen sehr gering ist.

### Beispiel 2:

Herstellen eines Kondensators aus der Folie gemäß Beispiel 1.

Die Folie gemäß Beispiel 1 wurde mittels Standard-Vakuum Metallisierung (Physical Vapor Deposition) mit Aluminium metallisiert, bis die Metallschicht eine Leitfähigkeit von 1,5 Ohm/mm² aufwies. Die Folie wies bei der Metallisierung eine gute Verarbeitbarkeit auf. Da die Folie Corona behandelt wurde, haftet die Metallschicht sehr gut auf der Folie. Der Mittelwert der Durchschlagsfestigkeit der so hergestellten metallisierten Folie betrug bei 96 Messungen 3671 V bei einer Standardabweichung von 348 V. Der Höchstwert betrug 4100 V und der geringste Wert betrug 2700 V. Der Prozessfähigkeitsindex (Cpk) betrug 0,883.

Die Folie wurde dann in 36 mm breite Streifen geschnitten. Auf einer Seite des Folienstreifens blieb ein Rand von 1,5 mm frei von der Metallschicht. Mit anderen Worten wird also die erfindungsgemäße Folie zunächst metallisiert und danach in Streifen geschnitten. Ein Freistreifen, der auch Freirand genannt wird, entsteht bereits bei der Metallisierung. Die Folien wurden zu einem flachgepressten Wickelkondensator mit den Dimensionen 15,1 mm (Höhe) x 31 mm (Breite) verarbeitet. Zum Vergleich wurden aus einer 12µm dicken biaxial verstreckten Polypropylen-Folie ebenfalls Kondensatoren nach demselben Verfahren gefertigt. Es wurde eine Folie vom Typ Treofan PHD verwendet, die erhältlich ist von der Treofan Germany GmbH & Co. KG, Raunheim, Deutschland.

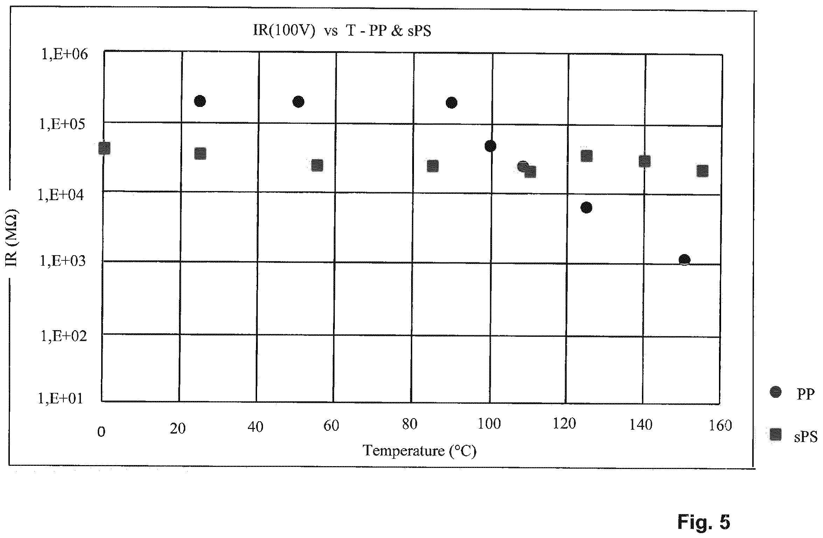

Anschließend wurden die Eigenschaften der Kondensatoren bestimmt. Soweit nicht anders angemerkt beziehen sich die folgenden Daten auf die aus den erfindungsgemäßen Folien hergestellten Kondensatoren. Das Dielektrikum ist bis 2400 V stabil. Bei einem Freirand von 1,5 mm kann nicht bei höheren Spannungen gemessen werden. Tabelle 4 und Figur 5 zeigen den Isolationswiderstand bei 100Vdc der erfindungsgemäßen Kondensatoren im Vergleich zu den in identischer Weise hergestellten Polypropylen-Kondensatoren.

**Tabelle 4:**

| Syndiotaktisches Polystyrol gemäß der vorliegenden Erfindung | | Polypropylen | |
|---|---|---|---|
| Temperatur t | Isolationswiderstand R_{ISO} | Temperatur t | Isolationswiderstand R_{ISO} |
| [°C] | [MOhm] | [°C] | [MOhm] |
| 0 | 40000 | 25 | 200000 |
| 25 | 35000 | 50 | 200000 |
| 55 | 25000 | 90 | 200000 |
| 85 | 25000 | 100 | 47500 |
| 110 | 20000 | 110 | 21666 |
| 125 | 35000 | 125 | 6250 |
| 140 | 30000 | 150 | 1200 |
| 155 | 22000 | | |

Die Werte zeigen, dass der Isolationswiderstand der erfindungsgemäßen Kondensatoren bis ca. 85°C um etwa eine Größenordnung niedriger liegt, darüber hinaus bleiben sie konstant, während die Werte der Vergleichs-Kondensatoren aus Polypropylen deutlich weiter sinken.

Ferner wurde das für Hochtemperatur-Kondensatoren wichtige Wärmeschrumpfverhalten der Kondensatoren selbst gemessen. Die Kondensatoren wurden für 10 Stunden auf eine Prüftemperatur erhitzt und dann für 1500 Stunden unter Anlegen einer Spannung von 1100 V an die Anschlüsse des Kondensators bei der Prüftemperatur gehalten. Anschließend wurde der Kondensator auf Raumtemperatur abgekühlt und Länge und Breite wurden gemessen. Es wurden jeweils 5 Kondensatoren auf Prüftemperaturen von 130°C, 140°C und 150°C erwärmt und anschließend vermessen. Die folgende Tabelle 5 gibt die Ergebnisse wieder. Die Ursprungsmaße der Kondensatoren sind 15,1 mm x 31 mm. Die Tabelle gibt ebenfalls die Änderung der Kapazität der Kondensatoren wieder. Die Anfangskapazität beträgt 2,05 µF.

**Tabelle 5:**

| Temperatur | | Länge [mm] | Änderung [%] | Kapazität [µF] | Änderung [%] |
|---|---|---|---|---|---|
| 130°C | Höhe | 15,55 | 3% | 2,01 | -2% |
| | Breite | 30,24 | -2% | | |
| 140°C | Höhe | 15,72 | 4% | 1,98 | -4% |
| | Breite | 30,08 | -3% | | |
| 150°C | Höhe | 15,83 | 5% | | |
| | Breite | 30,12 | -3% | | |

Die Kapazitätsstabilität der erfindungsgemäßen Kondensatoren ist ausgezeichnet. Die Änderung der Kapazität über den Temperaturbereich von -55°C bis 155°C beträgt maximal 4 %. Der Verlustfaktor ist niedrig. Bei hohen Temperaturen ist ein leichter Anstieg zu verzeichnen, er beträgt jedoch unter 0,0010. Dies ist überaus wichtig für die Anwendung mit hohen Strömen. Der Isolationswiderstand (gemessen bei 100V) ist hoch und stabil über den betrachteten Temperaturbereich. Die Durchschlagsfestigkeit zwischen 25°C und 150°C liegt oberhalb von 300V/µm.

## Patentansprüche

1. Verfahren zur Herstellung einer simultan biaxial verstreckten Folie für Folienkondensatoren umfassend wenigstens ein Homopolymer vom syndiotaktischen Polystyrol-Typ, umfassend die Schritte:
- Schmelzen des Polymers,
- Extrudieren des Polymers aus einer Breitschlitzdüse unter Herstellung einer Schmelze,
- Kühlen der so entstandenen Schmelze auf einer Kühlwalze unter Herstellung eines Castfilms (F), wobei die Temperatur der Kühlwalze auf eine Temperatur im Bereich von 70 bis 130°C eingestellt wird,
- Zugtrennung des Castfilms (F) zwischen Kühlwalze und Reckofen,
- Simultanes Recken der Folie in Längsrichtung und in Querrichtung im Reckofen,
**dadurch gekennzeichnet,**
**dass** in Gemischen von Homopolymeren vom syndiotaktischen Polystyrol-Typ mit anderen Polymeren, die nicht Homopolymere vom syndiotaktischen Polystyrol-Typ sind, die Menge der anderen Polymeren auf einen Bereich von 0,1 bis 10 Gew.-% beschränkt ist.

2. Verfahren gemäß Anspruch 1, **dadurch gekennzeichnet, dass** das Homopolymer vom syndiotaktischen Polystyrol-Typ reines syndiotaktisches Polystyrol ist.

3. Verfahren gemäß einem der Ansprüche 1 oder 2, **dadurch gekennzeichnet, dass** die Kühlwalze auf eine Temperatur im Bereich von 70 bis 100°C eingestellt wird.

4. Verfahren gemäß einem der Ansprüche 1 oder 2, **dadurch gekennzeichnet, dass** die Kühlwalze auf eine Temperatur zwischen 80°C und 100°C eingestellt wird.

5. Verfahren gemäß einem der vorangehenden Ansprüche, **dadurch gekennzeichnet, dass** die Folie an den beiden gegenüberliegenden Seiten Folienränder aufweist, die eine größere Materialdicke senkrecht zur Folienebene aufweisen als die Dicke des Folienmaterials zwischen den Folienrändern.

6. Verfahren gemäß einem der vorangehenden Ansprüche, **dadurch gekennzeichnet, dass** das Anlegen der Folie auf der Kühlwalze durch ein elektrostatisches Aufladungsverfahren unterstützt wird.

7. Verfahren gemäß einem der vorangehenden Ansprüche, insbesondere nach Ansprüchen 5 und 6, **dadurch gekennzeichnet, dass** das Anlegen der Ränder der Folie auf der Kühlwalze durch auf die Ränder der Folie gerichtete Luftdüsen unterstützt wird.

8. Verfahren gemäß einem der vorangehenden Ansprüche, **dadurch gekennzeichnet, dass** das Reckverhältnis in Längsrichtung und in Querrichtung jeweils 2,5 bis 5 beträgt.

9. Verfahren gemäß einem der vorangehenden Ansprüche, **dadurch gekennzeichnet, dass** nach dem simultanen Recken eine Relaxierung in Längsrichtung oder in Querrichtung oder in beiden Richtungen vorgenommen wird.

10. Verfahren gemäß einem der vorangehenden Ansprüche, **dadurch gekennzeichnet, dass** die Folie anschließend metallisiert wird.

11. Verfahren gemäß einem der vorangehenden Ansprüche, **dadurch gekennzeichnet, dass** die hergestellte Folie eine Oberflächenrauheit Ra gemessen nach DIN EN ISO 4287, von höchstens 0,1µm aufweist.

12. Verfahren gemäß einem der vorangehenden Ansprüche, **dadurch gekennzeichnet, dass** die hergestellte Folie bei 130°C einen Wärmeschrumpf von 5 % oder weniger in Längsrichtung und 3 % oder weniger in Querrichtung aufweist.

13. Verfahren gemäß einem der vorangehenden Ansprüche, **dadurch gekennzeichnet, dass** die hergestellte Folie eine Dicke von 4 bis 12 µm aufweist.

14. Verfahren gemäß einem der vorangehenden Ansprüche, **dadurch gekennzeichnet, dass** die hergestellte Folie eine durchschnittliche elektrische Durchschlagfestigkeit in einem Temperaturbereich von 25°C bis 155°C von wenigstens 200 V/µm aufweist.

15. Verfahren gemäß einem der vorangehenden Ansprüche, **dadurch gekennzeichnet, dass** die hergestellte Folie zumindest auf einer Seite eine Metallschicht aufweist.

## Claims

1. Method for producing a simultaneously biaxially stretched film for film capacitors comprising at least one syndiotactic polystyrene-type homopolymer, comprising the steps of:
- melting the polymer,
- extruding the polymer from a slot die to produce a melt,
- cooling the resulting melt on a chill roll to produce a cast film (F), the temperature of the chill roll being set to a temperature in the range of from 70 to 130°C,
- tension separation of the cast film (F) between the chill roll and the stretching furnace,
- simultaneous stretching of the film in the longitudinal direction and in the transverse direction in the stretching oven,
**characterised in that**
in mixtures of syndiotactic polystyrene-type homopolymers with other polymers which are not syndiotactic polystyrene-type homopolymers, the amount of the other polymers is limited to a range of from 0.1 to 10 wt.%.

2. Method according to claim 1, **characterised in that** the syndiotactic polystyrene-type homopolymer is a pure syndiotactic polystyrene.

3. Method according to either claim 1 or claim 2, **characterised in that** the chill roll is set to a temperature in the range of from 70 to 100°C.

4. Method according to either claim 1 or claim 2, **characterised in that** the chill roll is set to a temperature between 80°C and 100°C.

5. Method according to any of the preceding claims, **characterised in that** the film has film edges on the two opposing sides, which edges have a greater material thickness perpendicularly to the film plane than the thickness of the film material between the film edges.

6. Method according to any of the preceding claims, **characterised in that** the application of the film on the chill roll is assisted by an electrostatic charging process.

7. Method according to any of the preceding claims, in particular according to claims 5 and 6, **characterised in that** the application of the edges of the film on the chill roll is assisted by air nozzles directed to the edges of the film.

8. Method according to any of the preceding claims, **characterised in that** the stretching ratio in the longitudinal direction and in the transverse direction is 2.5 to 5 in each case.

9. Method according to any of the preceding claims, **characterised in that** after the simultaneous stretching, relaxation is carried out in the longitudinal direction or in the transverse direction or in both directions.

10. Method according to any of the preceding claims, **characterised in that** the film is subsequently metallized.

11. Method according to any of the preceding claims, **characterised in that** the film produced has a surface roughness Ra, measured according to DIN EN ISO 4287, of at most 0.1 µm.

12. Method according to any of the preceding claims, **characterised in that** the film produced has a heat shrinkage at 130°C of 5% or less in the longitudinal direction and 3% or less in the transverse direction.

13. Method according to any of the preceding claims, **characterised in that** the film produced has a thickness of 4 to 12 µm.

14. Method according to any of the preceding claims, **characterised in that** the film produced has an average dielectric strength in a temperature range of from 25°C to 155°C of at least 200 V/µm.

15. Method according to any of the preceding claims, **characterised in that** the film produced has a metal layer on at least one face.

## Revendications

1. Procédé de réalisation d'un film étiré biaxialement simultanément pour des condensateurs en film, comportant au moins un homopolymère du type polystyrène syndiotactique, comprenant les étapes consistant à :
- faire fondre le polymère,
- extruder le polymère hors d'une buse à fente large en réalisant une matière fondue,
- faire refroidir la matière fondue ainsi obtenue sur un cylindre de refroidissement en réalisant un film coulé (F), la température du cylindre de refroidissement étant réglée à une température dans la plage de 70 à 130 °C,
- séparer par traction le film coulé (F) entre le cylindre de refroidissement et un four d'étirage,
- étirer le film simultanément en direction longitudinale et en direction transversale dans le four d'étirage,
**caractérisé en ce que**
dans des mélanges de homopolymères du type polystyrène syndiotactique avec d'autres polymères qui ne sont pas des homopolymères du type polystyrène syndiotactique, la quantité des autres polymères est limitée à une plage de 0,1 à 10 % en poids.

2. Procédé selon la revendication 1, **caractérisé en ce que** le homopolymère du type polystyrène syndiotactique est un polystyrène syndiotactique pur.

3. Procédé selon l'une des revendications 1 ou 2, **caractérisé en ce que** le cylindre de refroidissement est réglé à une température dans la plage de 70 à 100 °C.

4. Procédé selon l'une des revendications 1 ou 2, **caractérisé en ce que** le cylindre de refroidissement est réglé à une température comprise entre 80 et 100 °C.

5. Procédé selon l'une des revendications précédentes, **caractérisé en ce que** sur les deux côtés opposés, le film présente des bords de film qui présentent une épaisseur perpendiculairement au plan du film qui est supérieure à l'épaisseur du matériau de film entre les bords du film.

6. Procédé selon l'une des revendications précédentes, **caractérisé en ce que** l'application du film sur le cylindre de refroidissement est assistée par un procédé de chargement électrostatique.

7. Procédé selon l'une des revendications précédentes, en particulier selon les revendications 5 et 6, **caractérisé en ce que** l'application des bords du film sur le cylindre de refroidissement est assistée par des buses d'air dirigée sur les bords du film.

8. Procédé selon l'une des revendications précédentes, **caractérisé en ce que** le rapport d'étirage en direction longitudinale et en direction transversale est respectivement de 2,5 à 5.

9. Procédé selon l'une des revendications précédentes, **caractérisé en ce que** l'étirage simultané est suivi d'une relaxation en direction longitudinale ou en direction transversale ou dans les deux directions.

10. Procédé selon l'une des revendications précédentes, **caractérisé en ce que** le film est ensuite métallisé.

11. Procédé selon l'une des revendications précédentes, **caractérisé en ce que** le film réalisé présente une rugosité de surface Ra, mesurée selon la norme DIN EN ISO 4287, au maximum de 0,1 µm.

12. Procédé selon l'une des revendications précédentes, **caractérisé en ce que** le film réalisé présente, à 130 °C, un retrait thermique de 5 % ou moins en direction longitudinale et de 3 % ou moins en direction transversale.

13. Procédé selon l'une des revendications précédentes, **caractérisé en ce que** le film réalisé présente une épaisseur de 4 à 12 µm.

14. Procédé selon l'une des revendications précédentes, **caractérisé en ce que** le film réalisé présente une rigidité diélectrique moyenne d'au moins 200 V/µm dans une plage de température de 25 °C à 155 °C.

15. Procédé selon l'une des revendications précédentes, **caractérisé en ce que** le film réalisé présente une couche métallique au moins sur une face.
